# EUROPEAN PATENT APPLICATION

(11) **EP 4 369 250 A1**
(43) Date of publication of application: **15.05.2024**
(21) Application number: 23382812.8
(22) Date of filing: 03.08.2023
(51) Int. Cl.: G06K 19/077, B67D 1/00, G07F 13/06

(54) **USER IDENTIFICATION SYSTEM OF A BEVERAGE MACHINE**

(30) Priority: 10.11.2022 ES 202231872 U
(71) Applicant: Masegosa Gonzalez, Gerardo, 08291 Ripollet Barcelona (ES)
(72) Inventor: Masegosa Gonzalez, Gerardo, 08291 Ripollet Barcelona (ES)
(74) Representative: Durán-Corretjer, S.L.P.

(57) **Abstract**

User identification system of a beverage dispensing machine, it comprises a beverage recipient sleeve, the sleeve having a base and a lateral surface to cover the bottom of the recipient, and an RFID tag on the inside of one of the walls of the sleeve.

## Description

The present invention relates to beverage dispensers. More specifically, the invention relates to water recipients, preferably bottles, that are used to collect the beverage from the dispenser. The present invention also relates to tracking means to customize the experience of drinking water from the dispenser. More specifically, the present invention relates to a user identification system for a beverage dispensing machine comprising a beverage recipient sleeve that facilitates said tracking.

Numerous methods are known in which tracking and personalization are achieved using radio frequency identification (RFID) circuits. RFID includes radio frequency communications including all frequency types in the radio frequency spectrum and different communication protocols and different ranges of the technology (for example, RFID includes near field communication or NFC). RFID allows both active and passive circuits to be used. In passive circuits, the circuit is powered by the waves emitted by an RFID reader, allowing the circuits to operate without the need of a battery. In general, RFID communication requires an RFID tag, which is usually a passive tag, but can also be a semi-passive or active tag, an RFID reader or transceiver, and a data processing system. The RFID tag can be read-only or read-write, i.e. enabling the data stored on the tag to be changed. RFID tags are small and can take the shape of a sticker.

However, RFID tags have not yet been successfully used in the field of beverage distribution using beverage dispensers, although the advantages would be many and varied. An RFID tag would enable identification of the user and therefore personalization of the beverage to be dispensed (for example the temperature at which the water or an infusion is served), or enable contactless payment, etc. It is known to include RFID tags in bottles or bottle caps. However, this is expensive, and the fact that the bottle is reused numerous times by the user makes bottle production runs small and therefore not economically attractive. On the other hand, the fact that the RFID tag is on the bottle prevents the user from freely switching bottles or recipients. Furthermore, the use of stickers with RFID tags is not feasible, due to the fact that the bottles have to be washed and the temperature differences to which the recipient is exposed, causing the stickers to fall off easily.

The present invention is intended to disclose means for personalizing the drinking experience at beverage dispensing machines, allowing consumption to be tracked.

More specifically, the present invention comprises a user identification system of a beverage dispensing machine that comprises a beverage recipient sleeve with a base and a lateral surface to cover the bottom of the recipient, and an RFID tag on the inside of one of the walls of the sleeve.

The use of a sleeve allows the user to change bottles freely. Furthermore, incorporating the tag into the sleeve instead of the bottle is more economically viable than incorporating it into the bottle. The invention thus facilitates the implementation of identification and tracking systems in beverage dispensing machine systems, both for the manufacturer or service provider and for the user.

Another advantage of the sleeve is that, although it is not the actual recipient, the RFID tag on the sleeve, associated with an identification code stored on the tag, enables the ideal cleaning temperature of the recipient to be identified, whether said recipient is a coffee cup or a protein-shake shaker. This feature also enables the sleeve to be combined with a sanitizing machine, in which the sanitizing protocol is applied according to the information contained in the sleeve. It also allows the sleeve to generate cleaning warnings depending on the type of recipient the sleeve has been placed on, if this information has been previously stored.

The beverage recipient is preferably a bottle. More preferably, the sleeve is cylindrical with one open base.

More preferably, the sleeve is made of elastic material, preferably with the RFID tag embedded in one of the walls thereof. The elastic material enables the sleeve to fit the walls of the recipient. Even more preferably, the sleeve is made of plastic material. This advantageously fully protects the tag from the beverage being dispensed by the beverage dispensing machine and allows the sleeve to be washed. Even more preferably, the sleeve is made of silicone.

In general, the sleeve material is preferably washable at 90°C and provides a barrier against liquids to protect the RFID tag/circuit.

Preferably, the RFID tag is a passive tag. However, the tag can also be an active tag with a small battery. Also preferably, the RFID tag is a read/write tag.

The sleeve may include an identifier (such as an LED) for warnings or services. The identifier can be placed anywhere on the sleeve, for example on a logo printed on the sleeve.

Preferably, the sleeve also comprises an external temperature indicator.

The sleeve may also comprise a metallic or magnetic laminar element or foil to enable magnetic or metallic objects to be attached to the sleeve. The metallic or magnetic foil element may be placed in one of the sides of the sleeve or in the base of the sleeve. Preferably, the metallic or magnetic foil element is embedded in the sleeve material.

The system according to the present invention can also include at least one RFID reader. Particularly preferably, the system comprises a beverage dispensing machine with an RFID reader arranged to read a sleeve according to the present invention. Preferably, the RFID reader is located in the vicinity of the beverage dispensing zone of the dispensing machine.

Finally, the dispensing machine of the system according to the present invention also includes a device for processing the data read by the tag reader. Typically, such a device is built into the control device of the dispensing machine, which preferably includes a remote-communication module.

The system may also comprise a recipient holder (such as a cup holder or a bottle holder) with an RFID reader designed to communicate with the RFID tag and a network or wireless connector to connect to a computer. This enables the user to modify their profile, to add credit to a wallet that later allows the user to dispense beverages from the dispensing machines, and the like.

For a better understanding of the present invention, drawings showing a non-limiting example embodiment thereof are attached.
Figure 1 is a perspective view of a beverage recipient with a sleeve belonging to a system according to the present invention.
Figure 2 is a perspective view of the sleeve in Figure 1, showing the base and an RFID circuit.
Figure 3 is a schematic view of a system according to the present invention comprising a beverage recipient, a sleeve according to the present invention, and a beverage dispensing machine with an RFID reader arranged to read the RFID circuit in the sleeve.
Figure 4 is another example of a sleeve according to the present invention.

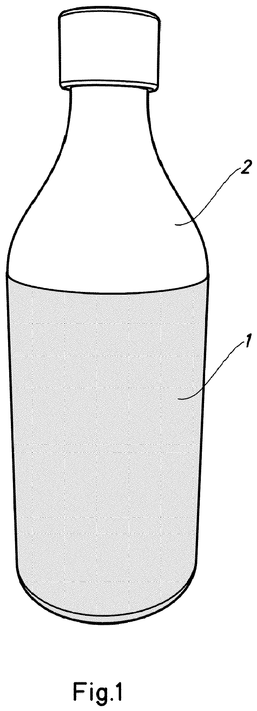

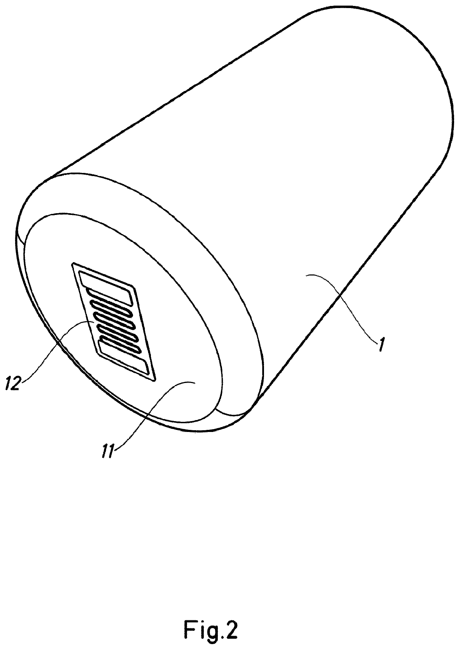

Figures 1 to 3 show a first example embodiment of a system according to the present invention. In the simplest version of the system, the system comprises a sleeve 1 as shown in the figures. This sleeve 1 is coordinated with the dispensing machine 3 to enable tracking and personalization of the user experience.

The example system comprises a cylindrical sleeve 1 with a circular bottom base and a cylindrical side wall, leaving an upper opening through which a bottle 2 can be inserted. In the example, the beverage recipient is a bottle 2, but could be any other type of recipient, such as a cup or a shot glass.

The sleeve 1 in the example is made of a plastic material, for example a thermoplastic, an elastomer, or a composite mixture of both. Preferably, the sleeve in the example is made of silicone.

The sleeve 1 in the example comprises an RFID tag or circuit 12. The RFID tag is a passive tag, that is writeable by a reader. Preferably, the tag is arranged in the bottom base, where the tag is less likely to be damaged and easier to read during beverage dispensing.

Preferably, the RFID tag in the example is embedded in the material of the sleeve 1. The material of the sleeve 1 in the example is a plastic material (such as silicone) that protects the tag 12 from impacts and enables the sleeve 1 to be washed repeatedly with no adverse effects.

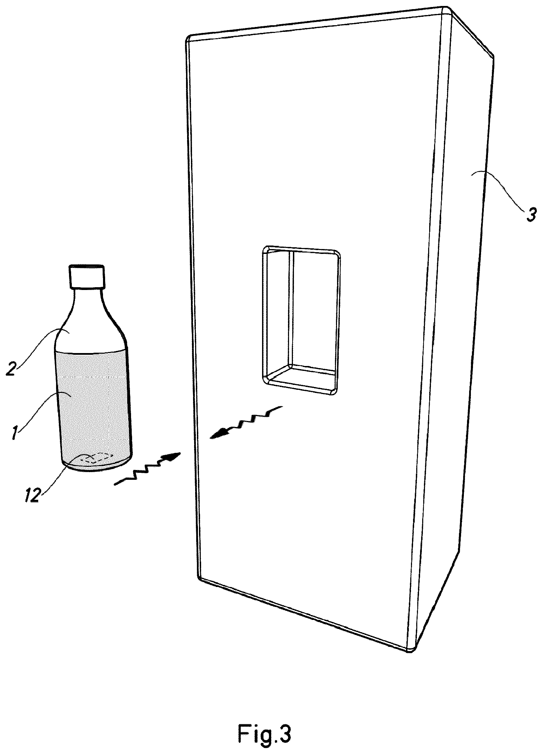

As shown in Figure 3, the example system also comprises at least one beverage dispensing machine 3. The machine can be a dispensing machine for mineral water or other beverages (teas, coffee, juices, etc.).

The dispensing machine 3 has an RFID reader designed to read the RFID tag 12 on the bottle. A user identification as well as service preferences (such as water temperature) can be stored on the RFID tag 12 of the bottle. The dispensing machine 3 reads the RFID tag 12 and can render the service according to the preference read from the RFID tag 12, without the user having to enter the parameters. The controller of the dispensing machine 3 preferably has wireless communication means to transmit the service information to a remote central server. This enables user information, consumption information, and consumption preferences to be updated centrally and in real time.

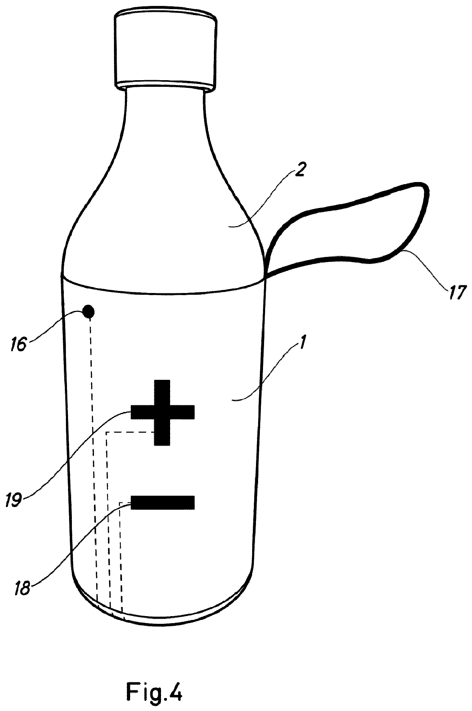

Figure 4 shows an alternative embodiment of the sleeve 1 that differs from the embodiment in the previous figures. The sleeve 1 also has an RFID tag embedded in the base of the sleeve 1, which is not shown in the figures. The RFID tag 12 in this example comprises a thermometer or thermostat designed to measure the external temperature. This part of the circuit of the RFID tag 12 is connected to the "plus" sign 19 and the "minus" sign 18, which are illuminated depending on the external temperature. The illumination of both signs can be a red/blue gradient depending on the temperature of the beverage. The plus sign therefore turns red if it is hot, indicating to the user that they should drink water. The minus symbol may be illuminated blue or yellow if it is neither hot nor cold. The illumination may for example be provided by an LED. Alternatively, thermal paint that changes colour depending on the temperature can be used, obviating the need to connect the signs 18, 19 to the RFID tag. The example also comprises a button 16 that is also connected to the RFID tag. The example in Figure 4 also includes a carry strap 17.

Alternatively, the button 16 can be a button that is outside the sleeve 1 and that communicates wirelessly (for example via Bluetooth) with the RFID tag and/or with the reader of the dispensing machine 3 and/or with the user's mobile phone. The button can either be an adhesive applied to the cap of the bottle or be completely separate so that the user can carry the button independently of the sleeve 1. The button can be used to control the user's mobile phone or extra functions to send water drinking signals or any other function or to raise/lower the volume of the mobile phone, etc. or to perform a check or to keep track of drinking water using checks, etc.

The sleeve may also have a metal foil on its base or sidewall to accommodate a magnet, for example in the form of a key ring. The foil can be embedded in the material of the sleeve. This allows, for example, branding campaign elements to be placed on the sleeve and can be applied to all types of sleeves according to the present invention (e.g. shot sleeves, souvenir sleeves, bottle sleeves, etc.).

Although the invention has been described and illustrated using a representative example, it should be understood that such an example embodiment in no way limits the present invention, and any variations included directly or by way of equivalence in the content of the attached claims should be considered to be included within the scope of the present invention.

## Claims

1. User identification system of a beverage dispensing machine, **characterized in that** it comprises a beverage recipient sleeve, the sleeve having a base and a lateral surface to cover the bottom of the recipient, and an RFID tag on the inside of one of the walls of the sleeve.

2. System according to Claim 1, **characterized in that** the beverage recipient is a bottle.

3. System according to Claim 1 or 2, **characterized in that** the RFID tag is embedded in one of the walls of the sleeve.

4. System according to any one of Claims 1 to 3, **characterized in that** the sleeve is made of an elastic material.

5. System according to any one of the preceding claims, **characterized in that** the RFID tag is a passive tag.

6. System according to any one of the preceding claims, **characterized in that** the RFID tag is a read/write tag.

7. System according to any one of the preceding claims, **characterized in that** the sleeve includes an external temperature indicator.

8. System according to any one of the preceding claims, **characterized in that** it also includes an RFID reader.

9. System according to any one of the preceding claims, **characterized in that** it comprises a beverage dispensing machine with an RFID reader arranged to read a sleeve according to the present invention.

10. System according to the preceding claim, **characterized in that** the RFID reader is located in the vicinity of the beverage dispensing zone of the dispensing machine.

11. System according to Claim 9 or 10, **characterized in that** the dispensing machine includes a device for processing the data read by the tag reader.

12. System according to any one of Claims 9 to 11, **characterized in that** the machine includes a device for processing the data read by the tag reader.

13. System according to the preceding claim, **characterized in that** said device for processing the data read is built into the control device of the dispensing machine.

14. System according to any one of Claims 9 to 13, **characterized in that** the control device of the dispensing machine includes a remote-communication module.
